# EUROPEAN PATENT APPLICATION

(11) **EP 4 733 650 A1**
(43) Date of publication of application: **29.04.2026**
(21) Application number: 25189793.0
(22) Date of filing: 16.07.2025
(51) Int. Cl.: F16M 11/32, F16B 7/10, B60T 11/04

(54) **CONTROL HANDLE OF PHOTOGRAPHY SUPPORT STAND AND PHOTOGRAPHY SUPPORT STAND**

(30) Priority: 23.10.2024 CN 202411486093
(71) Applicant: Shenzhen Leqi Innovation Co., Ltd., Shenzhen, Guangdong 518000 (CN)
(72) Inventor: HE, Peiwen, Shenzhen, 518000 (CN); TANG, Shaorui, Shenzhen, 518000 (CN)
(74) Representative: Valet Patent Services Limited

(57) **Abstract**

A control handle of a photography support stand and a photography support stand are provided. The control handle is configured to unlock or lock a support leg locking assembly of the photography support stand, and includes a handle housing and a hydraulic cylinder arranged in the handle housing. The hydraulic cylinder includes a cylinder body and a first piston. The cylinder body is defined with a hydraulic chamber for storing hydraulic fluid and a through hole that is communicated with the hydraulic chamber and configured to allow the hydraulic fluid to enter and exit the hydraulic chamber. The through hole is communicated with the support leg locking assembly. The first piston is slidably arranged in the hydraulic chamber and configured to expel the hydraulic fluid in the hydraulic chamber through the through hole or draw the hydraulic fluid back into the hydraulic chamber through the through hole.

## Description

### TECHNICAL FIELD

The present disclosure relates to the technical field of photography support stands, and in particular to a control handle of a photography support stand and a photography support stand.

### BACKGROUND

Photography support stands, which are very important auxiliary devices in the photographic process, can provide stable support for the camera, thus can effectively eliminate the shaking caused by hand-holding the camera, and significantly enhance the clarity and sharpness of the photos.

The photography support stand is typically provided with a control handle for users to operate, to lock or unlock of the telescopic adjustment function of the support legs of the photography support stand. In the locked state, the support leg cannot be extended or retracted; whereas in the unlocked state, the support leg can be extended or retracted for users to adjust the height of the photography support stand.

In related art, the control handle is an electronic control handle which is used to lock or unlock the support leg by sending a control signal to the support leg. However, when used for a long time in outdoor scenes, the control handle is prone to running out of power, then users need to carry additional chargers or portable power banks. This not only increases the burden of carrying but also leads to inconvenience in usage.

### SUMMARY

The main objective of the present disclosure is to provide a control handle of a photography support stand, which aims to solve the technical problem in the related art that the control handle of the photography support stand is inconvenient to use.

To achieve the above objective, the present disclosure provides a control handle of a photography support stand. The control handle is configured to unlock or lock a support leg locking assembly of the photography support stand and includes: a handle housing; and a hydraulic cylinder arranged in the handle housing, the hydraulic cylinder comprising a cylinder body and a first piston, the cylinder body being defined with a hydraulic chamber for storing hydraulic fluid and a through hole that is communicated with the hydraulic chamber and configured to allow the hydraulic fluid to enter or exit the hydraulic chamber, the through hole being communicated with the support leg locking assembly, and the first piston being slidably arranged in the hydraulic chamber and configured to expel the hydraulic fluid in the hydraulic chamber through the through hole or draw the hydraulic fluid back into the hydraulic chamber through the through hole.

In some embodiments, the first piston comprises a first piston plate and a first piston rod extending from a side surface of the first piston plate, and the first piston plate is in sliding fit with a chamber wall of the hydraulic chamber.

In some embodiments, the cylinder body is defined with a first sliding passage extending along an axial direction of the cylinder body, an end of the first sliding passage is docked with the hydraulic chamber, and the other end of the first sliding passage is defined with an opening; and the first piston rod passes through the first sliding passage and extends out of the cylinder body through the opening; and a first gap through which the hydraulic fluid passes is defined between the first piston rod and an inner wall of the first sliding passage, the cylinder body is further defined with a first over-flow port penetrating through the inner wall of the first sliding passage and communicated with the first sliding passage, and a liquid storage bin is defined in the handle housing and communicated with the first over-flow port.

In some embodiments, an outer wall of the first piston rod is sleeved with a first sealing ring, the first sealing ring is capable of moving along with the first piston rod, to enter the first sliding passage from the hydraulic chamber to seal the first gap or enter the hydraulic chamber from the first sliding passage to unseal the first gap.

In some embodiments, the control handle further includes: a pressure relief chamber for accommodating the hydraulic fluid. The first piston is defined with a pressure relief hole, the hydraulic chamber is communicated with the pressure relief chamber through the pressure relief hole, a first reset component and a slidable second piston are provided in the pressure relief chamber, and the first reset component is configured to apply a force to the second piston to reset the second piston.

In some embodiments, the first piston includes a first piston plate and a first piston rod extending from a side surface of the first piston plate, and the first piston plate is in sliding fit with a chamber wall of the hydraulic chamber; and the pressure relief chamber is defined in the first piston plate.

In some embodiments, the second piston includes a second piston plate and a second piston rod extending from a side surface of the second piston plate, and the second piston plate is in sliding fit with a chamber wall of the pressure relief chamber; and the first reset component is a first reset spring, one end of the first reset spring abuts against the chamber wall of the pressure relief chamber, and the other end of the first reset spring abuts against the second piston plate.

In some embodiments, the second piston is inversely mounted in the pressure relief chamber, the second piston rod is oriented opposite to the first piston rod and extends out from the second piston plate, and the first reset spring is sleeved on the second piston rod; and the pressure relief hole is defined in the first piston rod, a pressure relief passage is defined in the first piston rod, and the pressure relief hole is communicated with the pressure relief chamber through the pressure relief passage.

In some embodiments, the control handle further includes: a lever located on a peripheral side of the handle housing, an end of the lever being hinged with the handle housing and provided with a lifting member, the lifting member being arranged in the handle housing and configured to act on an end of the first piston rod facing away from the first piston plate, the lever being capable of pivoting to drive the lifting member to act on the first piston rod so as to drive the first piston to move; and a second reset component arranged in the hydraulic chamber, the second reset component being configured to apply a force to the first piston plate to reset the first piston.

In some embodiments, the control handle further includes: a knob rotatably arranged at an end of the lever; an abutment member located on a side of the lever facing the handle housing and connected with the knob; a first torsion spring arranged between the lever and the knob, the first torsion spring being configured to apply a force to the knob to reset the knob; and a second torsion spring arranged between the lever and the handle housing, the second torsion spring being configured to apply force to the lever to reset the lever. One end of the lifting member is hinged with the lever and the handle housing through a hinge shaft, and the other end of the lifting member is configured to act on the first piston rod, and the lifting member is provided with an abutment surface and an accommodation opening that are arranged adjacently along an axial direction of the hinge shaft, the abutment member is capable of moving along with the rotation of the knob to a first position where it abuts against the abutment surface or a second position where it is accommodated at the accommodation opening.

The present disclosure further provides a control handle of a photography support stand. The control handle is configured to unlock or lock a support leg locking assembly of the photography support stand and includes: a handle housing; and a hydraulic cylinder arranged in the handle housing, the hydraulic cylinder comprising a cylinder body and a first piston, the cylinder body being defined with a hydraulic chamber for storing hydraulic fluid and a through hole that is communicated with the hydraulic chamber and configured to allow the hydraulic fluid to enter or exit the hydraulic chamber, the through hole being communicated with the support leg locking assembly, and the first piston being slidably arranged in the hydraulic chamber and configured to expel the hydraulic fluid in the hydraulic chamber through the through hole or draw the hydraulic fluid back into the hydraulic chamber through the through hole.

The first piston is defined with a pressure relief chamber for accommodating the hydraulic fluid and a pressure relief hole communicating the pressure relief chamber with the hydraulic chamber and configured to allow the hydraulic fluid to pass through; a first reset component and a slidable second piston are provided in the pressure relief chamber, and the first reset component is configured to apply a force to the second piston to reset the second piston.

In some embodiments, the first piston includes a first piston plate and a first piston rod extending from a side surface of the first piston plate, and the first piston plate is in sliding fit with a chamber wall of the hydraulic chamber; and the pressure relief chamber is at least partially defined in the first piston plate.

In some embodiments, the second piston includes a second piston plate and a second piston rod extending from a side surface of the second piston plate, and the second piston plate is in sliding fit with a chamber wall of the pressure relief chamber; and the first reset component is a first reset spring, one end of the first reset spring abuts against the chamber wall of the pressure relief chamber, and the other end of the first reset spring abuts against the second piston plate.

In some embodiments, the cylinder body is further defined with a first sliding passage extending along an axial direction of the cylinder body, one end of the first sliding passage is docked with the hydraulic chamber, and the other end of the first sliding passage is defined with an opening; and the first piston rod passes through the first sliding passage and extends out of the cylinder body through the opening; and a first gap through which the hydraulic fluid passes is defined between the first piston rod and an inner wall of the first sliding passage, the cylinder body is further defined with a first over-flow port penetrating through the inner wall of the first sliding passage and communicated with the first sliding passage, and a liquid storage bin is provided in the handle housing and communicated with the first over-flow port.

In some embodiments, the second piston is normally mounted in the pressure relief chamber, the second piston rod is oriented in a same direction as the first piston rod, and the first reset spring is located on a side of the second piston plate facing away from the second piston rod; the first piston rod is defined with a second sliding passage extending along an axial direction of the first piston rod, one end of the second sliding passage is docked with the pressure relief chamber, and the second piston rod is inserted into the second sliding passage and in sliding fit with the second sliding passage; and the pressure relief chamber at least partially extends into the first piston rod, and the pressure relief hole is defined in the first piston rod and is arranged to penetrate through an inner wall of the pressure relief chamber.

In some embodiments, the first piston rod is further defined with an over-flow passage extending along the axial direction of the first piston rod, and the over-flow passage is located at the other end of the second sliding passage and communicated with the second sliding passage; and a second gap through which the hydraulic fluid passes is defined between the second piston rod and an inner wall of the second sliding passage, and the first piston rod is further defined with a second over-flow port penetrating through an inner wall of the over-flow passage and communicated with the over-flow passage.

In some embodiments, an outer wall of the second piston rod is sleeved with a second sealing ring, the second sealing ring is capable of moving along with the second piston rod, to enter the second sliding passage from the pressure relief chamber to seal the second gap or enter the pressure relief chamber from the second sliding passage to unseal the second gap.

In some embodiments, a third sealing ring is embedded in the inner wall of the first sliding passage, and the third sealing ring is arranged adjacent to the end of the first sliding passage docked with the hydraulic chamber and is configured to abut against the first piston rod.

The present disclosure further provides a photography support stand, including: a bearing base, configured for mounting a photography device; multiple support legs with a telescopic adjustment function, the multiple support legs being connected with the bearing base and configured to support the bearing base, and each support leg being provided with a support leg locking assembly; and the control handle according to any of the foregoing embodiments, the control handle being arranged on the bearing base and configured to unlock or lock the support leg locking assemblies.

According to the solution of the present disclosure, the control handle is applied to a photography support stand for controlling the locking or unlocking of a support leg locking assembly of the photography support stand. In the control handle, the through hole defined in the cylinder body of the hydraulic cylinder is communicated with the support leg locking assembly. The first piston slides inside the hydraulic chamber, to expel the hydraulic fluid or draw the hydraulic fluid back through the through hole, thereby driving the support leg locking assembly to perform the locking or unlocking action. For example, during the unlocking process, the first piston of the hydraulic cylinder is driven to move, thereby expelling the hydraulic fluid in the hydraulic chamber out through the through hole to the support leg locking assembly. Under the pressure of the hydraulic fluid, the components of the support leg locking assembly perform unlocking action, achieving the unlocking. During the locking process, the first piston is driven to move, thereby drawing the hydraulic fluid from the support leg locking assembly back into the hydraulic chamber through the through hole. As the pressure exerted by the hydraulic fluid decreases, the components of the support leg locking assembly perform locking action (e.g., reset by an elastic member), achieving the locking. Compared to the electric control handle in the related art, the control handle of the present disclosure uses a hydraulic handle, which does not require charging, so there is no need to carry additional devices such as chargers, mobile power supplies, etc., reducing the burden of carrying and offering convenience in use.

### BRIEF DESCRIPTION OF THE DRAWINGS

FIG. 1 is a schematic structural diagram of a photography support stand according to an embodiment of the present disclosure.
FIG. 2 is a schematic structural diagram of a part of the photography support stand in FIG. 1.
FIG. 3 is a schematic diagram showing an internal structure of a control handle according to an embodiment of the present disclosure.
FIG. 4 is a schematic structural diagram of a part of a control handle according to an embodiment of the present disclosure.
FIG. 5 is a schematic structural diagram of another part of a control handle according to an embodiment of the present disclosure.
FIG. 6 is a schematic diagram showing an internal structure of the part of the control handle in FIG. 5.
FIG. 7 is a schematic structural diagram of another part of a control handle according to an embodiment of the present disclosure.
FIG. 8 is a schematic diagram of an internal structure of the part of the control handle in FIG. 7.
FIG. 9 is a schematic diagram showing an internal structure of a control handle according to another embodiment of the present disclosure.
FIG. 10 is an exploded diagram showing partial structure of the control handle in FIG. 9.
FIG. 11 is an exploded diagram showing partial structure of the control handle in FIG. 9.

### DETAILED DESCRIPTION OF THE EMBODIMENTS

The technical solutions in the embodiments of the present disclosure will be described clearly and completely with reference to the accompanying drawings in the embodiments of the present disclosure. Obviously, the described embodiments are only a part of the embodiments of the present disclosure rather than all of them. Based on the embodiments in the present disclosure, all other embodiments obtained by those skilled in the art without creative work shall fall within the scope of protection of the present disclosure.

It should be noted that all directional indications (such as up, down, left, right, front, back) in the embodiments of the present disclosure are merely configured to explain relative position relationships or motion conditions between the components in a specific attitude (as shown in the drawings). The directional indication changes as the specific attitude changes.

It should be noted that when an element is described as "being fixed on" or "being arranged on" another element, the element may be directly arranged on the another element or there may be an intermediate element. When an element is described as "being connected to" another element, the element may be directly connected to the another element or there may be an intermediate element.

Moreover, the terms "first", "second", and the like in the present disclosure are merely used for description and cannot be understood as indicating or implying their relative importance or as implicitly indicating the quantity of the technical features indicated. Thus, the feature defined by "first" or "second" may explicitly or implicitly include at least one such feature. In addition, the technical solutions of various embodiments may be combined with each other, but must be based on that the combined technical solutions can be implemented by those skilled in the art. When the combination of the technical solutions is contradictory or impossible to realize, it shall be considered that such combination does not exist and is not within the scope of protection of the present disclosure.

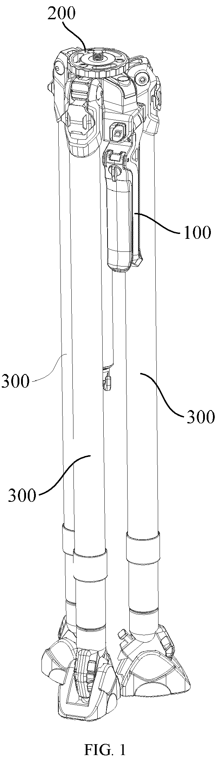

Referring to FIG. 1, as a tool of supporting photography devices such as cameras and camcorders, a photography support stand can assist users in maintaining the stability of the photography devices during shooting, enabling the capture of clearer and more accurate photos and videos.

In some embodiments, the present disclosure provides a control handle 100 of a photography support stand. The control handle 100 is configured to lock and unlock a support leg locking assembly of the photography support stand.

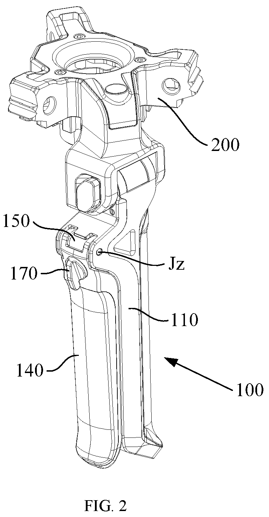

Referring to FIG. 2 to FIG. 4, the control handle 100 includes:
a handle housing 110; and
a hydraulic cylinder 120 arranged in the handle housing 110. The hydraulic cylinder 120 includes a cylinder body 121 and a first piston 122. The cylinder body 121 is defined with a hydraulic chamber 121Y for storing hydraulic fluid and a through hole 121G communicated with the hydraulic chamber 121Y and allowing the hydraulic fluid to enter or exit the hydraulic chamber 121Y. The through hole 121G is configured to be communicated with the support leg locking assembly. The first piston 122 is slidably arranged in the hydraulic chamber 121Y, and is configured to expel the hydraulic fluid in the hydraulic chamber 121Y through the through hole 121G or draw the hydraulic fluid back into the hydraulic chamber 121Y through the through hole 121G.

As a component of a photography support stand, the control handle 100 may be interlinked with the support leg locking assembly of the photography support stand, and is configured to lock or unlock the support leg locking assembly of the photography support stand. That is, user may operate the control handle 100 to lock the support leg locking assembly, in which state the support leg cannot be extended or retracted; or, the user may operate the control handle 100 to unlock the support leg locking assembly, in which state the support leg can be extended or retracted to adjust the height of the support leg. After the adjustment, the support leg is locked again.

The photography support stand may include a bearing base 200 and multiple support legs 300 that are connected to the bearing base 200 and configured to support the bearing base 200. The bearing base 200 is configured for mounting a photographic device, such as a camera, etc. The support leg locking assembly is arranged at the support leg 300 for clamping or releasing the support leg 300. The control handle 100 may be mounted on the bearing base 200 and interlinked with the support leg locking assembly.

As shown in FIG. 2, the handle housing 110 may be of an elongated cylindrical shape, which is convenient for the user to hold. An accommodating space is defined inside the handle housing 110 for accommodating components, including but not limited, the hydraulic cylinder 120. The handle housing 110 may include a first half-housing and a second half-housing that are butt-jointed to form the accommodating space. Additionally, the first half-housing and the second half-housing are detachably connected, by means of a screw connection, a snap-fit connection, or the like.

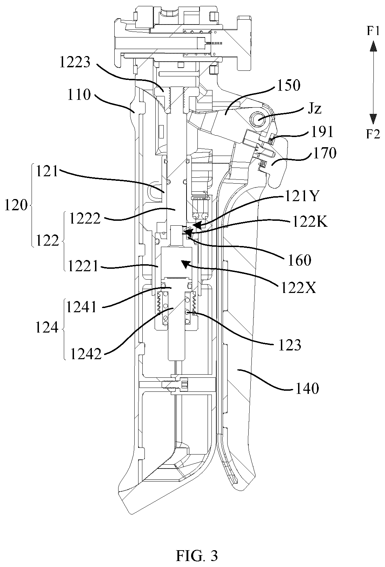

The first piston 122 of the hydraulic cylinder 120 may slide in the hydraulic chamber 121Y of the cylinder body 121, to expel the hydraulic fluid through the through hole 121G or draw back the hydraulic fluid through the through hole 121G. The sliding direction of the first piston 122 may be a first direction F1 or a second direction F2 along the axial direction of the cylinder body 121, wherein the first direction F1 is opposite to the second direction F2. The through hole 121G may be defined in an end surface of the cylinder body 121. The through hole 121G penetrates through the cylinder body 121 and is communicated with the hydraulic chamber 121Y. The hydraulic fluid may be hydraulic oil. As shown in FIG. 3, when the first piston 122 slides in the first direction F1, the storage volume of the hydraulic chamber 121Y for holding the hydraulic fluid gradually decreases, thereby expelling the hydraulic fluid out through the through hole 121G; and when the first piston 122 slides in the second direction F2, the storage volume of the hydraulic chamber 121Y for holding the hydraulic fluid gradually increases, thereby drawing the hydraulic fluid back through the through hole 121G.

The through hole 121G may be communicated with the support leg locking assembly. The first piston 122 slides inside the hydraulic chamber 121Y to expel the hydraulic fluid or draw back the hydraulic fluid through the through hole 121G, thereby driving the support leg locking assembly to perform an unlocking action or a locking action. A first liquid pipe may be connected between the through hole 121G and the support leg locking assembly, and the hydraulic fluid is delivered through the first liquid pipe.

**In** the unlocking process, the first piston 122 of the hydraulic cylinder 120 is driven to move, thereby expelling the hydraulic fluid in the hydraulic chamber 121Y out through the through hole 121G and allowing it to flow to the support leg locking assembly. Under the pressure of the hydraulic fluid, the components of the support leg locking assembly perform unlocking action, achieving the unlocking.

**In** the locking process, the first piston 122 is driven to move, thereby drawing the hydraulic fluid at the support leg locking assembly back into the hydraulic chamber 121Y through the through hole 121G. Due to the reduced pressure from the hydraulic fluid, the components of the support leg locking assembly perform locking action (for example, reset by an elastic member), achieving the locking.

The support leg locking assembly may include an oil cylinder and an execution component. The execution component is in transmission connection with a piston of the oil cylinder for clamping or releasing the support leg. The through hole 121G of the hydraulic cylinder 120 is communicated with the oil cylinder, and the hydraulic cylinder 120 may deliver the hydraulic fluid to the oil cylinder or draw the hydraulic fluid back from the oil cylinder, allowing the piston of the oil cylinder to move and thereby driving the execution component. As such, the execution component engages the support leg, switching the support leg into a non-telescopic locked state, or releases the support leg, switching the support leg into a telescopic unlocked state. This is merely illustration without limiting the present disclosure.

The control handle may be provided with an unlocking component that is configured to control the sliding of the first piston 122 of the hydraulic cylinder 120. The unlocking component may be a manual unlocking component, which is in transmission connection with the first piston 122 of the hydraulic cylinder 120. The user manually operates the manual unlocking component to drive the first piston 122 to slide, thereby performing the unlocking or locking action. The manual unlocking component may be a lever, a button, a slide button, etc., which is not limited herein.

The control handle 100 of the present disclosure uses a hydraulic handle, which, compared to the electric control handle in the related art, does not require charging, so there is no need to carry additional devices such as chargers, mobile power supplies, etc., which reduces the burden of carrying and offers convenience in use.

In some embodiments, the control handle 100 may be interlinked with the support leg locking assembly for each supporting leg. Thus, the user can manipulate the control handle 100 to simultaneously unlock or lock multiple support leg locking assemblies by a single operation. Thus, there is no need to perform the unlock action on each support leg locking assembly, making the control handle more convenient to use.

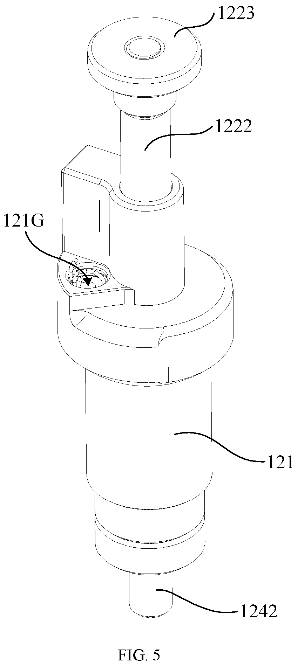

In some embodiments, referring to FIG. 3 to FIG. 6, the first piston 122 includes a first piston plate 1221 and a first piston rod 1222 extending from a side surface of the first piston plate 1221. The first piston plate 1221 is in sliding fit with a chamber wall of the hydraulic chamber 121Y.

The first piston plate 1221 and the first piston rod 1222 may be integrally formed. The first piston rod 1222 is located on a central axis of the first piston plate 1221 and extends from a side surface of the first piston plate 1221. The first piston plate 1221 is arranged to follow the motion of the first piston rod 1222. In the case that any one of the first piston rod 1222 and the first piston plate 1221 moves when an external force is applied, it will drive the other one to move. As the first piston plate 1221 slides along the chamber wall of the hydraulic chamber 121Y, the storage volume of the hydraulic chamber 121Y can be correspondingly compressed or expanded.

In some embodiments, the outer side wall of the first piston plate 1221 is sleeved with a first sealing component. The first sealing component is capable of sliding along with the first piston plate 1221. The first sealing component abuts against the chamber wall of the hydraulic chamber 121Y to achieve leak-proof sealing. The first sealing component may be an elastic ring.

The hydraulic system in the control handle 100 exhibits different characteristics during use depending on the type of the hydraulic fluid selected. For example, in the case that hydraulic oil is selected as the hydraulic fluid, the hydraulic fluid possesses the characteristic of thermal expansion and contraction. The photography support stand may be used in different weather environments with high or low temperatures, and the volume of hydraulic oil in the hydraulic system in the control handle 100 is prone to change due to temperature influences.

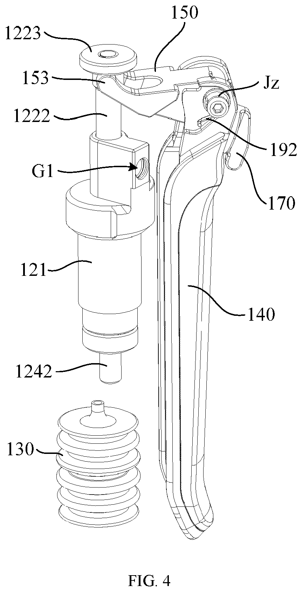

To ensure the stability of the hydraulic system in the control handle 100, in some embodiments, referring to FIG. 4 to FIG. 6, the cylinder body 121 is defined with a first sliding passage H1 extending along the axial direction of the cylinder body 121. One end of the first sliding passage H1 is docked with the hydraulic chamber 121Y, and the other end of the first sliding passage H1 is defined with an opening. The first piston rod 1222 passes through the first sliding passage H1 and extends out of the cylinder body 121 through the opening.

A first gap J1 for the hydraulic fluid to pass through is defined between the first piston rod 1222 and the inner wall of the first sliding passage H1. The cylinder body 121 is further defined with a first over-flow port G1 penetrating through the inner wall of the first sliding passage H1 and communicated with the first sliding passage H1. A liquid storage bin 130 is provided in the handle housing 110 and is communicated with the first over-flow port G1.

When the ambient temperature is high, if the hydraulic oil expands due to the influence of the high temperature, the expanded hydraulic oil in the hydraulic chamber 121Y may enter the first sliding passage H1, pass through the first gap J1 between the first piston rod 1222 and the inner wall of the first sliding passage H1, and enter the liquid storage bin 130 through the first over-flow port G1. The liquid storage bin 130 stores the expanded hydraulic oil, thereby releasing the oil pressure inside the cylinder body 121 of the hydraulic cylinder 120.

When the ambient temperature is low, if the hydraulic oil shrinks due to the influence of the low temperature, the hydraulic oil may flow back into the hydraulic chamber 121Y from the liquid storage bin 130 through the first over-flow port G1 and through the first gap J1 between the first piston rod 1222 and the inner wall of the first sliding passage H1.

The first gap J1, the first over-flow port G1, and the liquid storage bin 130 form a pressure relief passage for the hydraulic oil in the hydraulic chamber 121Y. This prevents damage to the sealing component caused by the hydraulic oil expanding at high temperatures, which could otherwise lead to oil leakage, and also protects the cylinder body 121 from deformation or rupture. Thus, the hydraulic system in the control handle 100 can adapt to the external environment temperature, thereby enhancing the applicability of the control handle 100.

As shown in FIG. 4, a liquid storage bag may be installed in the handle housing 110. The hydraulic cylinder 120 and the liquid storage bag are sequentially arranged along the axial direction of the handle housing 110. The liquid storage bag is served as the liquid storage bin 130. The liquid storage bag is constructed with multiple telescopic sections spaced along its axial direction. The liquid storage bag has a certain degree of elastic deformation capability, allowing it to automatically expand or contract in response to changes in the volume of the hydraulic oil inside, thereby adapting to increases or decreases in the amount of the hydraulic fluid. A second liquid pipe may be connected between the liquid storage bag and the first over-flow port G1, and the hydraulic fluid is delivered through the second liquid pipe.

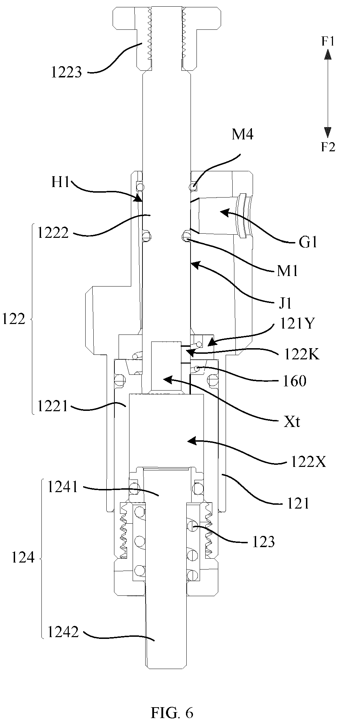

In some embodiments, referring to FIG. 6, the outer wall of the first piston rod 1222 is sleeved with a first sealing ring M1. The first sealing ring M1 is capable of moving along with the first piston rod 1222 to enter the first sliding passage H1 from the hydraulic chamber 121Y to seal the first gap J1, or enter the hydraulic chamber 121Y from the first sliding passage H1 to unseal the first gap J1. In some embodiments, the outer wall of the first piston rod 1222 is defined with a first annular groove, and the first sealing ring M1 is received in the first annular groove to realize positioning and mounting.

The first sealing ring M1 is arranged to follow the motion of the first piston rod 1222. When the first piston 122 slides in the first direction F1, the first sealing ring M1 may move along with the first piston rod 1222 to enter the first sliding passage H1 from the hydraulic chamber 121Y. Upon entering the first sliding passage H1, the first sealing ring M1 automatically abuts against the inner wall of the first sliding passage H1, thereby sealing the first gap J1. As a result, the hydraulic chamber 121Y is isolated from the first gap J1. That is, with the first sealing ring M1 acting as a barrier, the hydraulic oil is prevented from flowing between the hydraulic chamber 121Y and the first gap J1. When the first piston 122 slides in the second direction F2 (opposite to the first direction F1), the first sealing ring M1 may move along with the first piston rod 1222 to enter the hydraulic chamber 121Y from the first sliding passage H1. Upon entering the hydraulic chamber 121Y, the first sealing ring M1 automatically disengages from the inner wall of the first sliding passage H1, thereby unsealing the first gap J1. As a result, the hydraulic chamber 121Y is communicated with the first gap J1, allowing the hydraulic oil to flow between the hydraulic chamber 121Y and the first gap J1.

The control handle 100 has an operational state and a non-operational state (i.e., an idle state when not in use). In the operational state, when the user operates the control handle 100 to perform unlocking operation, the first sealing ring M1 moves along with the first piston 122 to enter the first sliding passage H1 and abut against the inner wall of the first sliding passage H1, thereby sealing the first gap J1. As a result, the hydraulic chamber 121Y is isolated from the first gap J1, which ensures that excess hydraulic oil only flows into the pressure relief chamber 122X for pressure relief and does not flow into the liquid storage bin 130 during the unlocking process. In the non-operational state, depending on the position of the first piston 122, the first sealing ring M1 is correspondingly located in the hydraulic chamber 121Y and does not form a seal for the first gap J1. Since the hydraulic chamber 121Y is communicated with the first gap J1, the hydraulic oil can flow freely between the hydraulic chamber 121Y and the liquid storage bin 130 even if the volume of the hydraulic oil changes due to the influence of the external ambient temperature, which is adaptable to external environmental temperatures.

To achieve precise execution of the locking and unlocking actions, the hydraulic cylinder 120 typically needs to be filled with sufficient hydraulic oil. However, in the working process of the hydraulic cylinder 120, an excessive amount of hydraulic oil may lead to excessive internal oil pressure within the cylinder body 121, which may prone to cause damage to the sealing component, resulting in oil leakage. This may even cause deformation or rupture of the cylinder body 1211, not only posing a high safety risk but also causing the control handle 100 to fail and become unusable.

To improve the safety and reliability of the control handle 100, in some embodiments, referring to FIG. 3 and FIG. 6, the control handle 100 further includes:
a pressure relief chamber 122X for accommodating the hydraulic fluid.

The first piston 122 is defined with a pressure relief hole 122K, and the hydraulic chamber 121Y is communicated with the pressure relief chamber 122X through the pressure relief hole 122K. A first reset component 123 and a slidable second piston 124 are provided in the pressure relief chamber 122X. The first reset component 123 acts on the second piston 124 for applying a force to the second piston 124 to reset the second piston 124.

The control handle 100 is defined with the pressure relief chamber 122X, within which the second piston 124 and the first reset component 123 are arranged. Additionally, the hydraulic chamber 121Y is communicated with the pressure relief chamber 122X through the pressure relief hole 122K defined in the first piston 122, such that the hydraulic fluid can flow between the pressure relief chamber 122X and the hydraulic chamber 121Y. In some embodiments, a pressure relief bag (not shown in the figures) may be installed in the handle housing 110, and the hydraulic cylinder 120 and the pressure relief bag are sequentially arranged along the axial direction of the handle housing 110. An internal chamber of the pressure relief bag correspondingly defines the pressure relief chamber 122X and is communicated with the hydraulic chamber 121Y. This is illustrative and not intended to limit the present disclosure. In some embodiments, the sliding direction of the second piston 124 may be the first direction F1 or the second direction F2 along the axial direction of the cylinder body 121, wherein the first direction F1 is opposite to the second direction F2. The pressure relief hole 122K penetrates through the first piston 122 to allow the pressure relief chamber 122X to be communicated with the hydraulic chamber 121Y. The first reset component 123 may be, for example, a spring, an elastic sheet, etc., which is not limited thereto. When the hydraulic fluid in the hydraulic chamber 121Y flows into the pressure relief chamber 122X through the pressure relief hole 122K, it correspondingly pushes the second piston 124 to move in the second direction F2 from an initial position; and when the hydraulic fluid in the pressure relief chamber 122X flows into the hydraulic chamber 121Y through the pressure relief hole 122K, the second piston 124 moves in the first direction F1 under the action of the first reset component 123, returning to its initial position.

Based on the pressure relief chamber 122X, the unlocking process of the control handle 100 is as follows:
The first piston 122 is driven to move, thereby expelling the hydraulic fluid in the hydraulic chamber 121Y to flow out (such as flowing to the support leg locking assembly). When the hydraulic fluid flowed out reaches the maximum amount (i.e., reaching the maximum amount that can be received), continued movement of the first piston 122 will cause excess hydraulic fluid in the hydraulic chamber 121Y to flow into the pressure relief chamber 122X through the pressure relief hole 122K, and the excess hydraulic fluid will push the second piston 124 in the pressure relief chamber 122X to move, achieving pressure relief.

The locking process of the control handle 100 is as follows:
The first piston 122 is driven to move, thereby drawing hydraulic fluid back into the hydraulic chamber 121Y through the through hole 121G, and the flowed out hydraulic fluid gradually decreases until reaching the minimum amount. As the first piston 122 continues to move, the second piston 124 resets toward its initial position under the force applied by the first reset component 123. The hydraulic fluid in the pressure relief chamber 122X flows back into the hydraulic chamber 121Y through the pressure relief hole 122K.

That is, during the working process of the hydraulic cylinder 120, excess hydraulic fluid from the hydraulic chamber 121Y of the hydraulic cylinder 120 is received by the pressure relief chamber 122X, achieving pressure relief. This prevents excessive pressure of the hydraulic fluid inside the cylinder body 121, which reduces the likelihood of oil leakage caused by seal damage, and mitigates safety risks such as deformation or rupture of the cylinder body 121. Thus, the safety and reliability of the hydraulic system in the control handle 100 are enhanced.

In some embodiments, with reference to FIG. 3, FIG. 5 and FIG. 6, the first piston 122 includes a first piston plate 1221 and a first piston rod 1222 extending from a side surface of the first piston plate 1221. The first piston plate 1221 is in sliding fit with the chamber wall of the hydraulic chamber 121Y.

The pressure relief chamber 122X is defined in the first piston plate 1221.

In the embodiments, the first piston plate 1221 and the first piston rod 1222 may be integrally formed. The first piston rod 1222 is located on a central axis of the first piston plate 1221 and extends from a side surface of the first piston plate 1221. The first piston plate 1221 is arranged to follow the motion of the first piston rod 1222. In the case that any one of the first piston rod 1222 and the first piston plate 1221 moves when an external force is applied, it will drive the other one to move. As the first piston plate 1221 slides along the chamber wall of the hydraulic chamber 121Y, the storage volume of the hydraulic chamber 121Y can be correspondingly compressed or expanded. In some embodiments, the outer side wall of the first piston plate 1221 is sleeved with a first sealing component. The first sealing component is capable of sliding along with the first piston plate 1221. The first sealing component abuts against the chamber wall of the hydraulic chamber 121Y to achieve leak-proof sealing. The first sealing component may be an elastic ring.

By defining the pressure relief chamber 122X in the first piston plate 1221, the structure is compact and occupies less space, which is conducive to the miniaturization and lightening of the control handle 100. Moreover, the first piston plate 1221 has a larger size than the first piston rod 1222. Thus, compared to defining the pressure relief chamber 122X in the first piston rod 1222, defining the pressure relief chamber 122X in the first piston plate 1221 allows the pressure relief chamber 122X to have a larger capacity, such that the pressure relief chamber 122X can accommodate more hydraulic fluid during pressure relief, thereby enhancing the pressure relief capability.

In some embodiments, with reference to FIG. 3, FIG. 5, and FIG. 6, the second piston 124 includes a second piston plate 1241 and a second piston rod 1242 extending from a side surface of the second piston plate 1241. The second piston plate 1241 is in sliding fit with the chamber wall of the pressure relief chamber 122X.

The first reset component 123 is a first reset spring. One end of the first reset spring abuts against the chamber wall of the pressure relief chamber 122X, and the other end of the first reset spring abuts against the second piston plate 1241.

In the embodiments, the second piston plate 1241 and the second piston rod 1242 may be integrally formed. The second piston rod 1242 is located on a central axis of the second piston plate 1241, and extends from a side surface of the second piston plate 1241. The second piston plate 1241 is arranged to follow the motion of the second piston rod 1242. In the case that any one of the second piston plate 1241 and the second piston rod 1242 moves when an external force is applied, it will drive the other one to move. As the second piston plate 1241 slides along the chamber wall of the pressure relief chamber 122X, the storage volume of the pressure relief chamber 122X can be correspondingly compressed or expanded. In some embodiments, the outer side wall of the second piston plate 1241 is sleeved with a second sealing component which is capable of sliding along with the second piston plate 1241. The second sealing component abuts against the chamber wall of the pressure relief chamber 122X to achieve leak-proof sealing. The second sealing component may be an elastic ring. In some embodiments, the second piston rod 1242 is arranged coaxially with the first piston rod 1222. The first piston 122, the second piston 124, and other components are arranged along the axial direction of the hydraulic cylinder 120, which helps to prevent the radial dimensions of the hydraulic cylinder 120 becoming excessively large.

The first reset component 123 is a first reset spring which abuts against the second piston plate 1241 to apply a force to the second piston 124. In combination with the foregoing embodiments, when the hydraulic fluid in the hydraulic chamber 121Y flows into the pressure relief chamber 122X through the pressure relief hole 122K, it pushes the second piston 124 to move from an initial position, and at the same time, the first reset spring is compressed by the second piston plate 1241 of the second piston 124, accumulating elastic potential energy; and when the hydraulic fluid in the pressure relief chamber 122X flows back into the hydraulic chamber 121Y through the pressure relief hole 122K, the first reset spring releases the elastic potential energy to push the second piston plate 1241 of the second piston 124, thereby driving the second piston 124 to return to its initial position.

In some embodiments, with reference to FIG. 3, FIG. 5, and FIG. 6, the second piston 124 is inversely mounted in the pressure relief chamber 122X, the second piston rod 1242 is oriented opposite to the first piston rod 1222, and the second piston rod 1242 extends out from the second piston plate 1241. The first reset spring is sleeved on the second piston rod 1242.

The pressure relief hole 122K is defined in the first piston rod 1222, and the first piston rod 1222 is defined with a pressure relief passage Xt. The pressure relief hole 122K is communicated with the pressure relief chamber 122X through the pressure relief passage Xt.

The inverse mounting means that the second piston 124 is arranged inversely along the axial direction of the hydraulic cylinder 120 inside the pressure relief chamber 122X. Taking the orientation of the first piston 122 as a reference, the second piston rod 1242 is oriented opposite to the first piston rod 1222. For example, as shown in FIG. 6, along the axial direction of the cylinder body 121, the first piston rod 1222 is oriented in the first direction F1, while the second piston rod 1242 is oriented in the second direction F2 opposite to the first direction F1. The first rest spring is sleeved on the second piston rod 1242, and the second piston rod 1242 serves to limit the position of the first reset spring, preventing the first rest spring from deviating from its installed position. This ensures that the force applied by the first reset spring on the second piston plate 1241 is balanced and stable.

The pressure relief passage Xt may extend along the length direction of the first piston rod 1222, and a central axis of the pressure relief passage Xt is coincident with a central axis of the first piston rod 1222. The pressure relief hole 122K penetrates through the first piston rod 1222 from the outer side wall of the first piston rod 1222 and is communicated with the pressure relief passage Xt. One end of the pressure relief passage Xt is communicated with the pressure relief chamber 122X. Thus, the hydraulic chamber 121Y, the pressure relief hole 122K, the pressure relief passage Xt, and the pressure relief chamber 122X are communicated in sequence. When the first piston 122 slides to compress the storage volume of the hydraulic chamber 121Y, the flow path of the hydraulic fluid is: the hydraulic chamber 121Y→the pressure relief hole 122K→the pressure relief passage Xt→the pressure relief chamber 122X; that is, the hydraulic fluid in the hydraulic chamber 121Y flows into the pressure relief passage Xt through the pressure relief hole 122K, passes through the pressure relief passage Xt, and then enters the pressure relief chamber 122Xt. When the first piston 122 slides to expand the storage volume of the hydraulic chamber 121Y, the flow path of the hydraulic fluid is: the pressure relief chamber 122X→the pressure relief passage Xt→the pressure relief hole 122K →the hydraulic chamber 121Y; that is, the hydraulic fluid in the pressure relief chamber 122X flows into the pressure relief passage Xt, passes through the pressure relief passage Xt, and then flows back into the hydraulic chamber 121Y.

In some embodiments, with reference to FIG. 2 to FIG. 4, and FIG. 9, the control handle 100 further includes a lever 140 and a second reset component 160.

The lever 140 is located on a peripheral side of the handle housing 110. One end of the lever 140 is hinged with the handle housing 110 and is provided with a lifting member 150. The lifting member 150 is arranged in the handle housing 110 and acts on the end of the first piston rod 1222 facing away from the first piston plate 1221. The lever 140 is capable of rotating, to drive the lifting member 150 to act on the first piston rod 1222, thereby driving the first piston 122 to move.

The second reset component 160 is arranged in the hydraulic chamber 121Y. The second reset component 160 acts on the first piston plate 1221 for applying a force to the first piston plate 1221 to reset the first piston 122.

The lever 140 in the embodiments is used for unlocking. The user may operate (e.g., hold) the lever 140 to pivot it, so as to drive the lifting member 150. The lifting member 150 correspondingly lifts the first piston rod 1222, to drive the first piston 122 to move in the first direction F1 from its initial position. Consequently, the first piston 122 expels the hydraulic fluid in the hydraulic chamber 121Y through the through hole 121G to flow out (such as flowing to the support leg locking assembly). This enables the telescopic adjustment function of the support leg, which facilitates the user to adjust the height of the support leg.

After the height adjustment of the support leg is completed, the user may release the lever 140. The first piston 122, under the influence of the second reset component 160, moves in the second direction F2 (opposite to the first direction F1) to reset. Consequently, the external hydraulic fluid is drawn back into the hydraulic chamber 121Y through the through hole 121G, thereby disabling the telescopic adjustment function of the support leg.

As shown in FIG. 4, the end of the first piston rod 1222 facing away from the first piston plate 1221 may be provided with a detachable piston cap 1223. In some embodiments, the piston cap 1223 is sleeved on the first piston rod 1222 and threaded with the first piston rod 1222. The lifting member 150 abuts against the bottom of the piston cap 1223 to act on the first piston rod 122. The lifting member 150 is provided with two lifting arms 153 that are spaced apart and face each other, and the two lifting arms 153 abut against two sides of the bottom of the piston cap 1223.

In some embodiments, the second reset component 160 is a second reset spring. One end of the second reset spring abuts against the chamber wall of the hydraulic chamber 121Y, and the other end of the second reset spring abuts against the first piston plate 1221. The second reset spring is sleeved on the first piston rod 1222, and the first piston rod 1222 serves to limit the position of the second rest spring, preventing the second rest spring from deviating from its installed position. This ensures that the force exerted by the second reset spring on the first piston plate 1221 is balanced and stable.

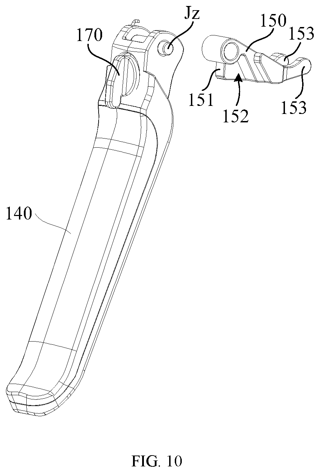

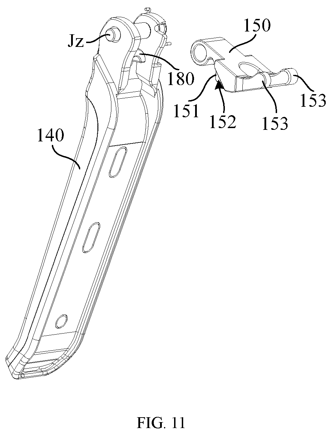

In some embodiments, with reference to FIG. 2 to FIG. 4, and FIG. 9 to FIG. 11, the control handle 100 further includes:
a knob 170 rotatably arranged on one end of the lever 140;
an abutment member 180 located on the side of the lever 140 facing the handle housing 110 and connected with the knob 170;
a first torsion spring 191 arranged between the lever 140 and the knob 170, the first torsion spring 191 being configured to apply a force to the knob 170 to reset the knob 170; and
a second torsion spring 192 arranged between the lever 140 and the handle housing 110, the second torsion spring 192 being configured to apply a force to the lever 140 to reset the lever 140.

One end of the lifting member 150 is hinged with the lever 140 and the handle housing 110 through a hinge shaft Jz, and the other end of the lifting member 150 acts on the first piston rod 1222. The lifting member 150 is provided with an abutment surface 151 and an accommodation opening 152 which are arranged adjacently along the axial direction of the hinge shaft Jz. The abutment member 180 is capable of moving, in response to rotation of the knob 170, to a first position where it abuts against the abutment surface 151 or a second position where it is accommodated in the accommodation opening 152.

In the embodiments, the lever 140 may be hinged with the handle housing 110 through the hinge shaft Jz to achieve rotatable arrangement. The second torsion spring 192 may be sleeved on the hinge shaft Jz, and is connected with both the handle housing 110 and the lever 140. The second torsion spring 192 continuously applies a force to the lever 140 to allow the lever 140 to reset. The knob 170 may be mounted on the lever 140 through a rotating shaft to achieve rotatable arrangement. The first torsion spring 191 may be sleeved on the rotating shaft, and is connected with both the lever 140 and the knob 170. The first torsion spring 191 continuously applies a force to the knob 170 to allow the knob 170 to reset. One end of the lifting member 150 serves as an acting end that acts on the first piston rod 1222, and the other end of the lifting member 150 is sleeved on the hinge shaft Jz, allowing it to rotate around the hinge shaft Jz. The abutment member 180 is provided with an arc-shaped abutment portion that rotates along with the knob 170. When the arc-shaped abutment portion of the abutment member 180 rotates to the first position, it can abut against the abutment surface 151 of the lifting member 150; and when the arc-shaped abutment portion of the abutment member 180 rotates to the second position, it can be accommodated in the accommodation opening 152 of the lifting member 150.

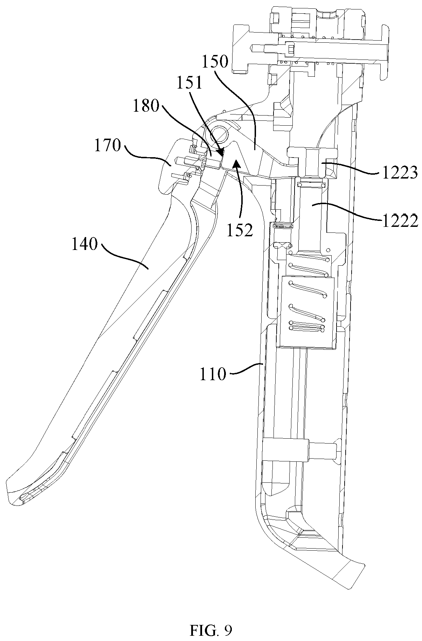

The lever 140 has a stowed state and a deployed state, and is capable of switching between the two states. When the lever 140 is in a non-operational state (i.e., the idle state when not in use, as shown in FIG. 3), it is in the stowed state; and when the lever 140 is in an operational state (as shown in FIG. 9), it is in the deployed state.

When the user needs to operate the control handle 100 to enable the telescopic adjustment function of the support leg, it is necessary to first switch the lever 140 from the non-operational state (i.e., the idle state when not in use, as shown in FIG. 3) to the operational state (as shown in FIG. 9).

The user may lift the lever 140 to switch the lever 140 from the stowed state to the deployed state. During the outward lifting process of the lever 140, as it rotates outward (i.e., away from the handle housing 110), the abutment member 180 gradually exits from the accommodation opening 152 at the second position, and the included angle between the lever 140 and the lifting member 150 gradually increases. When the lever 140 is lifted to a preset position, the abutment member 180 completely exits from the accommodation opening 152 without being obstructed by the inner wall of the accommodation opening 152. The first torsion spring 191 releases its elastic potential energy, such that the knob 170 rotates under the action of the first torsion spring 191 and drives the abutment member 180 to rotate, switching the abutment member 180 from the second position to the first position, where it abuts against the abutment surface 151 of the lifting member 150 (as shown in FIG. 9). Through the abutment cooperation between the abutment member 180 and the lifting member 150, the lever 140 can be maintained in the deployed state and is capable of driving the lifting member 150, and the lever 140 is correspondingly switched to the operational state.

In the operational state, the user may operate (e.g., hold) the lever 140 to rotate inward (i.e., toward the handle housing 110), so as to drive the lifting member 150 to rotate by the abutment member 180. The lifting member 150 correspondingly lifts the first piston rod 1222, thereby driving the first piston 122 to move in the first direction F1 from its initial position. Consequently, the hydraulic fluid in the hydraulic chamber 121Y is expelled through the through hole 121G to flow out (such as flowing to the support leg locking assembly), enabling the telescopic adjustment function of the support leg and allowing the user to adjust the height of the support leg. After the height adjustment of the support leg is completed, the user may release the lever 140. The first piston 122, under the influence of the second reset component 160, moves in the second direction F2 (opposite to the first direction F1) to reset. Consequently, the hydraulic fluid is drawn back into the hydraulic chamber 121Y through the through hole 121G, disabling the telescopic adjustment function of the support leg.

When the user does not need to use the telescopic adjustment function of the support leg, the lever 140 can be switched from the operational state to the non-operational state (i.e., the idle state when not in use), that is, the lever 140 is switched from the deployed state to the stowed state for daily storage.

The user may rotate the knob 170 to drive the abutment member 180 to rotate, switching it from the first position to the second position. That is, the abutment member 180 disengages from the abutment surface 151 of the lifting member and reaches the accommodation opening 152. After releasing the knob 170, the second torsion spring 192 releases its elastic potential energy, and the lever 140 rotates inward (i.e., toward the handle housing 110) under the force applied by the second torsion spring 192. As the lever 140 rotates inward, the abutment member 180 gradually enters into the accommodation opening 152. When the abutment member 180 is accommodated within the accommodation opening 152, the lever 140 is in the storage state and also switched to the non-operational state. The operation is simple and convenient.

The present disclosure further provides a control handle 100 of a photography support stand, for unlocking or lock a support leg locking assembly of the photography support stand. Referring to FIG. 2 to FIG. 4, the control handle 100 includes:
a handle housing 110; and
a hydraulic cylinder 120 arranged in the handle housing 110. The hydraulic cylinder 120 includes a cylinder body 121 and a first piston 122. The cylinder body 121 is defined with a hydraulic chamber 121Y for storing hydraulic fluid and a through hole 121G communicated with the hydraulic chamber 121Y and allowing the hydraulic fluid to enter or exit the hydraulic chamber 121Y. The through hole 121G is communicated with the support leg locking assembly. The first piston 122 is slidably arranged in the hydraulic chamber 121Y, and is configured to expel the hydraulic fluid from the hydraulic chamber 121Y through the through hole 121G or to draw the hydraulic fluid back into the hydraulic chamber 121Y.

The first piston 122 is defined with a pressure relief chamber 122X capable of accommodating the hydraulic fluid, and a pressure relief hole 122K that communicates the pressure relief chamber 122X with the hydraulic chamber 121Y and allows the hydraulic fluid to pass through. A first reset component 123 and a slidable second piston 124 are provided inside the pressure relief chamber 122X. The first reset component 123 is configured to apply a force on the second piston 124 to reset the second piston 124.

As a component of a photography support stand, the control handle 100 may be interlinked with the support leg locking assembly of the photography support stand, and is configured to lock or unlock the support leg locking assembly of the photography support stand. That is, user may operate the control handle 100 to lock the support leg locking assembly, in which state the support leg cannot be extended or retracted; or, the user may operate the control handle 100 to unlock the support leg locking assembly, in which state the support leg can be extended or retracted to adjust the height of the support leg. After the adjustment, the support leg is locked again.

The photography support stand may include a bearing base 200 and multiple support legs 300 that are connected to the bearing base 200 and configured to support the bearing base 200. The bearing base 200 is configured for mounting a photographic device, such as a camera, etc. The support leg locking assembly is arranged at the support leg 300 for clamping or releasing the support leg 300. The control handle 100 may be mounted on the bearing base 200 and interlinked with the support leg locking assembly.

As shown in FIG. 2, the handle housing 110 may be of an elongated cylindrical shape, which is convenient for the user to hold. An accommodating space is defined inside the handle housing 110 for accommodating components, including but not limited, the hydraulic cylinder 120. The handle housing 110 may include a first half-housing and a second half-housing that are butt-jointed to form the accommodating space. Additionally, the first half-housing and the second half-housing are detachably connected, by means of a screw connection, a snap-fit connection, or the like.

The first piston 122 of the hydraulic cylinder 120 may slide in the hydraulic chamber 121Y of the cylinder body 121, to expel the hydraulic fluid through the through hole 121G or draw back the hydraulic fluid through the through hole 121G. The sliding direction of the first piston 122 may be a first direction F1 or a second direction F2 along the axial direction of the cylinder body 121, wherein the first direction F1 is opposite to the second direction F2. The through hole 121G may be defined in an end surface of the cylinder body 121. The through hole 121G penetrates through the cylinder body 121 and is communicated with the hydraulic chamber 121Y. The hydraulic fluid may be hydraulic oil. As shown in FIG. 3, when the first piston 122 slides in the first direction F1, the storage volume of the hydraulic chamber 121Y for holding the hydraulic fluid gradually decreases, thereby expelling the hydraulic fluid out through the through hole 121G; and when the first piston 122 slides in the second direction F2, the storage volume of the hydraulic chamber 121Y for holding the hydraulic fluid gradually increases, thereby drawing the hydraulic fluid back through the through hole 121G.

The through hole 121G may be communicated with the support leg locking assembly. The first piston 122 slides inside the hydraulic chamber 121Y to expel the hydraulic fluid or draw back the hydraulic fluid through the through hole 121G, thereby driving the support leg locking assembly to perform an unlocking action or a locking action. A first liquid pipe may be connected between the through hole 121G and the support leg locking assembly, and the hydraulic fluid is delivered through the first liquid pipe.

In the unlocking process, the first piston 122 of the hydraulic cylinder 120 is driven to move, thereby expelling the hydraulic fluid in the hydraulic chamber 121Y out through the through hole 121G and allowing it to flow to the support leg locking assembly. Under the pressure of the hydraulic fluid, the components of the support leg locking assembly perform unlocking action, achieving the unlocking.

In the locking process, the first piston 122 is driven to move, thereby drawing the hydraulic fluid at the support leg locking assembly back into the hydraulic chamber 121Y through the through hole 121G. Due to the reduced pressure from the hydraulic fluid, the components of the support leg locking assembly perform locking action (for example, reset by an elastic member), achieving the locking.

The support leg locking assembly may include an oil cylinder and an execution component. The execution component is in transmission connection with a piston of the oil cylinder for clamping or releasing the support leg. The through hole 121G of the hydraulic cylinder 120 is communicated with the oil cylinder, and the hydraulic cylinder 120 may deliver the hydraulic fluid to the oil cylinder or draw the hydraulic fluid back from the oil cylinder, allowing the piston of the oil cylinder to move and thereby driving the execution component. As such, the execution component engages the support leg, switching the support leg into a non-telescopic locked state, or releases the support leg, switching the support leg into a telescopic unlocked state. This is merely illustration without limiting the present disclosure.

The control handle may be provided with an unlocking component that is configured to control the sliding of the first piston 122 of the hydraulic cylinder 120. The unlocking component may be a manual unlocking component, which is in transmission connection with the first piston 122 of the hydraulic cylinder 120. The user manually operates the manual unlocking component to drive the first piston 122 to slide, thereby performing the unlocking or locking action. The manual unlocking component may be a lever, a button, a slide button, etc., which is not limited herein.

The control handle 100 of the present disclosure uses a hydraulic handle, which, compared to the electric control handle in the related art, does not require charging, so there is no need to carry additional devices such as chargers, mobile power supplies, etc., which reduces the burden of carrying and offers convenience in use.

In some embodiments, the control handle 100 may be interlinked with the support leg locking assembly for each supporting leg. Thus, the user can manipulate the control handle 100 to simultaneously unlock or lock multiple support leg locking assemblies by a single operation. Thus, there is no need to perform the unlock action on each support leg locking assembly, making the control handle more convenient to use.

The control handle 100 is defined with the pressure relief chamber 122X, within which the second piston 124 and the first reset component 123 are arranged. Additionally, the hydraulic chamber 121Y is communicated with the pressure relief chamber 122X through the pressure relief hole 122K defined in the first piston 122, such that the hydraulic fluid can flow between the pressure relief chamber 122X and the hydraulic chamber 121Y. In some embodiments, a pressure relief bag (not shown in the figures) may be installed in the handle housing 110, and the hydraulic cylinder 120 and the pressure relief bag are sequentially arranged along the axial direction of the handle housing 110. An internal chamber of the pressure relief bag correspondingly defines the pressure relief chamber 122X and is communicated with the hydraulic chamber 121Y. This is illustrative and not intended to limit the present disclosure. In some embodiments, the sliding direction of the second piston 124 may be the first direction F1 or the second direction F2 along the axial direction of the cylinder body 121, wherein the first direction F1 is opposite to the second direction F2. The pressure relief hole 122K penetrates through the first piston 122 to allow the pressure relief chamber 122X to be communicated with the hydraulic chamber 121Y. The first reset component 123 may be, for example, a spring, an elastic sheet, etc., which is not limited thereto. When the hydraulic fluid in the hydraulic chamber 121Y flows into the pressure relief chamber 122X through the pressure relief hole 122K, it correspondingly pushes the second piston 124 to move in the second direction F2 from an initial position; and when the hydraulic fluid in the pressure relief chamber 122X flows into the hydraulic chamber 121Y through the pressure relief hole 122K, the second piston 124 moves in the first direction F1 under the action of the first reset component 123, returning to its initial position.

Based on the pressure relief chamber 122X, the unlocking process of the control handle 100 is as follows:
The first piston 122 is driven to move, thereby expelling the hydraulic fluid in the hydraulic chamber 121Y to flow out (such as flowing to the support leg locking assembly). When the hydraulic fluid flowed out reaches the maximum amount (i.e., reaching the maximum amount that can be received), continued movement of the first piston 122 will cause excess hydraulic fluid in the hydraulic chamber 121Y to flow into the pressure relief chamber 122X through the pressure relief hole 122K, and the excess hydraulic fluid will push the second piston 124 in the pressure relief chamber 122X to move, achieving pressure relief.

The locking process of the control handle 100 is as follows:
The first piston 122 is driven to move, thereby drawing hydraulic fluid back into the hydraulic chamber 121Y through the through hole 121G, and the flowed out hydraulic fluid gradually decreases until reaching the minimum amount. As the first piston 122 continues to move, the second piston 124 resets toward its initial position under the force applied by the first reset component 123. The hydraulic fluid in the pressure relief chamber 122X flows back into the hydraulic chamber 121Y through the pressure relief hole 122K.

That is, during the working process of the hydraulic cylinder 120, excess hydraulic fluid from the hydraulic chamber 121Y of the hydraulic cylinder 120 is received by the pressure relief chamber 122X, achieving pressure relief. This prevents excessive pressure of the hydraulic fluid inside the cylinder body 121, which reduces the likelihood of oil leakage caused by seal damage, and mitigates safety risks such as deformation or rupture of the cylinder body 121. Thus, the safety and reliability of the hydraulic system in the control handle 100 are enhanced. By defining the pressure relief chamber 122X in the first piston plate 1221, the structure is compact and occupies less space, which is conducive to the miniaturization and lightening of the control handle 100.

In some embodiments, with reference to FIG. 3 and FIG. 4, the first piston 122 includes a first piston plate 1221 and a first piston rod 1222 extending from a side surface of the first piston plate 1221. The first piston plate 1221 is in sliding fit with the chamber wall of the hydraulic chamber 121Y.

The pressure relief chamber 122X is defined in the first piston plate 1221.

In the embodiments, the first piston plate 1221 and the first piston rod 1222 may be integrally formed. The first piston rod 1222 is located on a central axis of the first piston plate 1221 and extends from a side surface of the first piston plate 1221. The first piston plate 1221 is arranged to follow the motion of the first piston rod 1222. In the case that any one of the first piston rod 1222 and the first piston plate 1221 moves when an external force is applied, it will drive the other one to move. As the first piston plate 1221 slides along the chamber wall of the hydraulic chamber 121Y, the storage volume of the hydraulic chamber 121Y can be correspondingly compressed or expanded. In some embodiments, the outer side wall of the first piston plate 1221 is sleeved with a first sealing component. The first sealing component is capable of sliding along with the first piston plate 1221. The first sealing component abuts against the chamber wall of the hydraulic chamber 121Y to achieve leak-proof sealing. The first sealing component may be an elastic ring.

The first piston plate 1221 has a larger size than the first piston rod 1222. Thus, compared to defining the pressure relief chamber 122X in the first piston rod 1222, defining the pressure relief chamber 122X in the first piston plate 1221 allows the pressure relief chamber 122X to have a larger capacity, such that the pressure relief chamber 122X can accommodate more hydraulic fluid during pressure relief, thereby enhancing the pressure relief capability.

In some embodiments, with reference to FIG. 3, FIG. 5, and FIG. 8, the second piston 124 includes a second piston plate 1241 and a second piston rod 1242 extending from a side surface of the second piston plate 1241. The second piston plate 1241 is in sliding fit with the chamber wall of the pressure relief chamber 122X.

The first reset component 123 is a first reset spring. One end of the first reset spring abuts against the chamber wall of the pressure relief chamber 122X, and the other end of the first reset spring abuts against the second piston plate 1241.

In the embodiments, the second piston plate 1241 and the second piston rod 1242 may be integrally formed. The second piston rod 1242 is located on a central axis of the second piston plate 1241, and extends from a side surface of the second piston plate 1241. The second piston plate 1241 is arranged to follow the motion of the second piston rod 1242. In the case that any one of the second piston plate 1241 and the second piston rod 1242 moves when an external force is applied, it will drive the other one to move. As the second piston plate 1241 slides along the chamber wall of the pressure relief chamber 122X, the storage volume of the pressure relief chamber 122X can be correspondingly compressed or expanded. In some embodiments, the outer side wall of the second piston plate 1241 is sleeved with a second sealing component which is capable of sliding along with the second piston plate 1241. The second sealing component abuts against the chamber wall of the pressure relief chamber 122X to achieve leak-proof sealing. The second sealing component may be an elastic ring. In some embodiments, the second piston rod 1242 is arranged coaxially with the first piston rod 1222. The first piston 122, the second piston 124, and other components are arranged along the axial direction of the hydraulic cylinder 120, which helps to prevent the radial dimensions of the hydraulic cylinder 120 becoming excessively large.

The first reset component 123 is a first reset spring which abuts against the second piston plate 1241 to apply a force to the second piston 124. In combination with the foregoing embodiments, when the hydraulic fluid in the hydraulic chamber 121Y flows into the pressure relief chamber 122X through the pressure relief hole 122K, it pushes the second piston 124 to move from an initial position, and at the same time, the first reset spring is compressed by the second piston plate 1241 of the second piston 124, accumulating elastic potential energy; and when the hydraulic fluid in the pressure relief chamber 122X flows back into the hydraulic chamber 121Y through the pressure relief hole 122K, the first reset spring releases the elastic potential energy to push the second piston plate 1241 of the second piston 124, thereby driving the second piston 124 to return to its initial position.

The hydraulic system in the control handle 100 exhibits different characteristics during use depending on the type of the hydraulic fluid selected. For example, in the case that hydraulic oil is selected as the hydraulic fluid, the hydraulic fluid possesses the characteristic of thermal expansion and contraction. The photography support stand may be used in different weather environments with high or low temperatures, and the volume of hydraulic oil in the hydraulic system in the control handle 100 is prone to change due to temperature influences.

To ensure the stability of the hydraulic system in the control handle 100, in some embodiments, referring to FIG. 4 to FIG. 6, the cylinder body 121 is defined with a first sliding passage H1 extending along the axial direction of the cylinder body 121. One end of the first sliding passage H1 is docked with the hydraulic chamber 121Y, and the other end of the first sliding passage H1 is defined with an opening. The first piston rod 1222 passes through the first sliding passage H1 and extends out of the cylinder body 121 through the opening.

A first gap J1 for the hydraulic fluid to pass through is defined between the first piston rod 1222 and the inner wall of the first sliding passage H1. The cylinder body 121 is further defined with a first over-flow port G1 penetrating through the inner wall of the first sliding passage H1 and communicated with the first sliding passage H1. A liquid storage bin 130 is provided in the handle housing 110 and is communicated with the first over-flow port G1.

When the ambient temperature is high, if the hydraulic oil expands due to the influence of the high temperature, the expanded hydraulic oil in the hydraulic chamber 121Y may enter the first sliding passage H1, pass through the first gap J1 between the first piston rod 1222 and the inner wall of the first sliding passage H1, and enter the liquid storage bin 130 through the first over-flow port G1. The liquid storage bin 130 stores the expanded hydraulic oil, thereby releasing the oil pressure inside the cylinder body 121 of the hydraulic cylinder 120.

When the ambient temperature is low, if the hydraulic oil shrinks due to the influence of the low temperature, the hydraulic oil may flow back into the hydraulic chamber 121Y from the liquid storage bin 130 through the first over-flow port G1 and through the first gap J1 between the first piston rod 1222 and the inner wall of the first sliding passage H1.

The first gap J1, the first over-flow port G1, and the liquid storage bin 130 form a pressure relief passage for the hydraulic oil in the hydraulic chamber 121Y. This prevents damage to the sealing component caused by the hydraulic oil expanding at high temperatures, which could otherwise lead to oil leakage, and also protects the cylinder body 121 from deformation or rupture. Thus, the hydraulic system in the control handle 100 can adapt to the external environment temperature, thereby enhancing the applicability of the control handle 100.

As shown in FIG. 4, a liquid storage bag may be installed in the handle housing 110. The hydraulic cylinder 120 and the liquid storage bag are sequentially arranged along the axial direction of the handle housing 110. The liquid storage bag is served as the liquid storage bin 130. The liquid storage bag is constructed with multiple telescopic sections spaced along its axial direction. The liquid storage bag has a certain degree of elastic deformation capability, allowing it to automatically expand or contract in response to changes in the volume of the hydraulic oil inside, thereby adapting to increases or decreases in the amount of the hydraulic fluid. A second liquid pipe may be connected between the liquid storage bag and the first over-flow port G1, and the hydraulic fluid is delivered through the second liquid pipe.

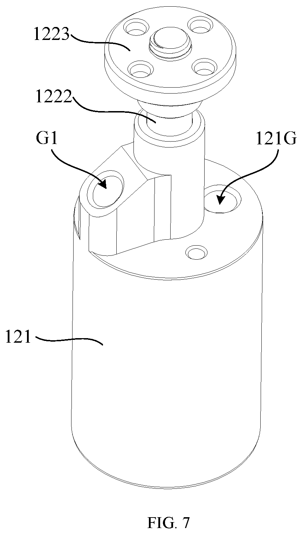

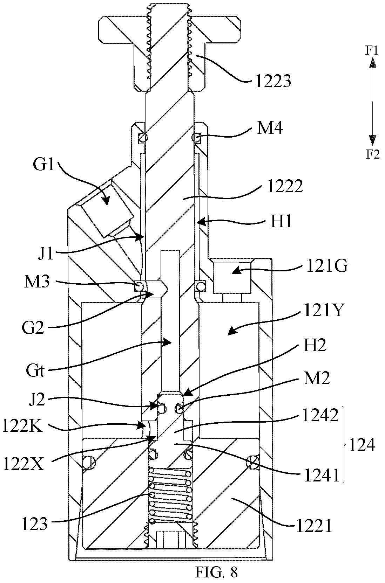

In some embodiments, with reference to FIG. 7 and FIG. 8, the second piston 124 is normally mounted in the pressure relief chamber 122X, the second piston rod 1242 is oriented in the same direction as the first piston rod 1222, and the first reset spring is located on the side of the second piston plate 1241 facing away from the second piston rod 1242.

The first piston rod 1222 is defined with a second sliding passage H2 extending along the axial direction of the first piston rod 1222, and one end of the second sliding passage H2 is docked with the pressure relief chamber 122X. The second piston rod 1242 is inserted into the second sliding passage H2 and is in sliding fit with the second sliding passage H2.

The pressure relief chamber 122X at least partially extends into the first piston rod 1222. The pressure relief hole 122K is defined in the first piston rod 1222 and penetrates through the inner wall of the pressure relief chamber 122X.

The normal mounting means that the second piston 124 is arranged forwardly along the axial direction of the hydraulic cylinder 120 inside the pressure relief chamber 122X. Taking the orientation of the first piston 122 is as a reference, the second piston rod 1242 is oriented in the same direction as the first piston rod 1222. For example, as shown in FIG. 8, along the axial direction of the cylinder body 121, the first piston rod 1222 is oriented in the first direction F1, and the second piston rod 1242 is also oriented in the first direction F1. A first reset spring is provided on the side of the second piston plate 1241 facing away from the second piston rod 1242.

The second sliding passage H2 may extend along the length direction of the first piston rod 1222, and a central axis of the second sliding passage H2 is coincident with a central axis of the first piston rod 1222. Moreover, the pressure relief hole 122K penetrates through the first piston rod 1222 from the outer side wall of the first piston rod 1222 and is communicated with the pressure relief chamber 122X. When the second piston plate 1241 of the second piston 124 slides within the pressure relief chamber 122X, the second piston rod 1242 correspondingly slides along the second sliding passage H2. This provides movement guidance, enhancing the motion accuracy and stability of the second piston 124.

In some embodiments, referring to FIG. 8, the first piston rod 1222 is further defined with an over-flow passage Gt extending along the axial direction of the first piston rod 1222. The over-flow passage Gt is located at the other end of the second sliding passage H2 and is communicated with the second sliding passage H2.

A second gap J2 allowing the hydraulic fluid to passes through is defined between the second piston rod 1242 and the inner wall of the second sliding passage H2. The first piston rod 1222 is further defined with a second over-flow port G2 that penetrates through the inner wall of the over-flow passage Gt and is communicated with the over-flow passage Gt.

The over-flow passage Gt may extend along the length direction of the first piston rod 1222, and a central axis of the over-flow passage Gt is coincident with a central axis of the first piston rod 1222. The second over-flow port G2 penetrates through the first piston rod 1222 from the outer side wall of the first piston rod 1222 and is communicated with the over-flow passage Gt. One end of the over-flow passage Gt is communicated with the second sliding passage H2.

When the ambient temperature is high, if the hydraulic oil expands due to the influence of the high temperature, the expanded hydraulic oil in the hydraulic chamber 121Y may flow through the pressure relief hole 122K into the pressure relief chamber 122X. The pressure relief chamber 122X stores the expanded hydraulic oil, thereby releasing the internal oil pressure within the cylinder body 121 of the hydraulic cylinder 120. When the pressure relief chamber 122X reaches its maximum capacity for storing the hydraulic oil, the expanded hydraulic oil flows from the pressure relief chamber 122X into the second sliding passage H2, enters the over-flow passage Gt through the second gap J2 between the second piston rod 1242 and the inner wall of the second sliding passage H2, and enters the first sliding passage H1 through the second over-flow port G2. Then, the hydraulic oil passes through the first gap J1 between the first piston rod 1222 and the inner wall of the first sliding passage H1, and enters the liquid storage bin 130 through the first over-flow port G1. The liquid storage bin 130 stores the expanded hydraulic oil, further releasing the internal oil pressure within the cylinder body 121 of the hydraulic cylinder 120.

When the ambient temperature is low, the hydraulic oil contracts due to the low temperature. The hydraulic oil may flow from the liquid storage bin 130 back to the first sliding passage H1 through the first over-flow port G1 and through the first gap J1 between the first piston rod 1222 and the inner wall of the first sliding passage H1. Then, the hydraulic oil enters the flow passage Gt through the second over-flow port G2, and flows back to the second sliding passage H2 through the second gap J2 between the second piston rod 1242 and the inner wall of the second sliding passage H2. Finally, the hydraulic oil flows back to the hydraulic chamber 121Y through the pressure relief chamber 122X and the pressure relief hole 122K.

That is, the pressure relief hole 122K, the pressure relief chamber 122X, the second gap J2, the over-flow passage Gt, the second over-flow port G2, the first gap J1, the first over-flow port G1, and the liquid storage bin 130 form the pressure relief passage for the hydraulic oil in the hydraulic chamber 121Y. This prevents damage to the sealing component caused by the hydraulic oil expanding at high temperatures, which could otherwise lead to oil leakage, and also protects the cylinder body 121 from deformation or rupture. Thus, the hydraulic system in the control handle 100 can adapt to the external environment temperature, thereby enhancing the applicability of the control handle 100.

In some embodiments, referring to FIG. 8, an outer wall of the second piston rod 1242 is sleeved with a second sealing ring M2. The second sealing ring M2 is capable of moving along with the second piston rod 1242 to enter the second sliding passage H2 from the pressure relief chamber 122X to seal the second gap J2 or enter the pressure relief chamber 122X from the second sliding passage H2 to unseal the second gap J2. In some embodiments, the outer wall of the second piston rod 1242 is defined with a second annular groove, and the second sealing ring M2 is accommodated in the second annular groove to realize positioning and mounting.

The second sealing ring M2 is arranged to follow the motion of the second piston rod 1242. When the second piston 124 slides in the first direction F1, the second sealing ring M2 can move along with the second piston rod 1242 to enter the second sliding passage H2 from the pressure relief chamber 122X. Upon entering the second sliding passage H2, the second sealing ring M2 automatically abuts against the inner wall of the second sliding passage H2, thereby sealing the second gap J2. Consequently, the pressure relief chamber 122X is isolated from the second gap J2. That is, with the second sealing ring M2 acting as a barrier, the hydraulic oil is prevented from flowing between the pressure relief chamber 122X and the second gap J2. When the second piston 124 slides in the second direction F2 (opposite to the first direction F1), the second sealing ring M2 moves along with the second piston rod 1242 to enter the pressure relief chamber 122X from the second sliding passage H2. Upon entering the pressure relief chamber 122X, the second sealing ring M2 automatically disengages from the inner wall of the second sliding passage H2, thereby unsealing the second gap J2. As a result, the pressure relief chamber 122X is communicated with the second gap J2, allowing the hydraulic oil to flow between the pressure relief chamber 122X and the second gap J2.

The control handle 100 has an operational state and a non-operational state (i.e., the idle state when not in use). In the operational state, when the user operates the control handle 100 to perform the unlocking operation, the movement of the first piston 122 allows the hydraulic oil in the hydraulic chamber 121Y to flow through the pressure relief hole 122K into the pressure relief chamber 122X. In the non-operational state, if the hydraulic oil expands due to high temperatures, the expanded hydraulic oil in the hydraulic chamber 121Y may flow into the pressure relief chamber 122X through the pressure relief hole 122K.

When the hydraulic oil in the hydraulic chamber 121Y enters the pressure relief chamber 122X, it pushes the second piston 124 to move, thereby releasing the internal oil pressure within the cylinder body 121 of the hydraulic cylinder 120. During the movement of the second piston 124, the second sealing ring M2 moves from the second sliding passage H2 into the pressure relief chamber 122X, unsealing the second gap J2. When the pressure relief chamber 122X reaches its maximum capacity for storing the hydraulic oil, the expanded hydraulic oil flows from the pressure relief chamber 122X into the second sliding passage H2, enters the over-flow passage Gt through the second gap J2 between the second piston rod 1242 and the inner wall of the second sliding passage H2, and enters the first sliding passage H1 through the second over-flow port G2. Then, the hydraulic oil passes through the first gap J1 between the first piston rod 1222 and the inner wall of the first sliding passage H1, and flows into the liquid storage bin 130 through the first over-flow port G1. The liquid storage bin 130 stores the expanded hydraulic oil, further releasing the internal oil pressure within the cylinder body 121 of the hydraulic cylinder 120.

In some embodiments, referring to FIG. 8, a third sealing ring M3 is embedded in the inner wall of the first sliding passage H1. The third sealing ring M3 is arranged adjacent to the end of the first sliding passage H1 docked with the hydraulic chamber 121Y, and is configured to abut against the first piston rod 1222. In some embodiments, the inner wall of the first sliding passage H1 is defined with a third annular groove, and the third sealing ring M3 is accommodated in the third annular groove to realize positioning and installation. The third sealing ring M3 serves the purpose of isolating the hydraulic chamber 121Y from the first gap J1. This prevents the hydraulic fluid, which enters the first sliding passage H1 through either the second over-flow port G2 or the first over-flow port G1, from flowing directly back into the hydraulic chamber 121Y.

In some embodiments, referring to FIG. 6 and FIG. 8, a fourth sealing ring M4 is embedded in the inner wall of the first sliding passage H1. The fourth sealing ring M4 is arranged adjacent to the opening and abuts against the first piston rod 1222. In some embodiments, the inner wall of the first sliding passage H1 is defined with a fourth annular groove, and the fourth sealing ring M4 is accommodated in the fourth annular groove to realize positioning and installation. The fourth sealing ring M4 abuts against the first piston rod 1222 at the opening to achieve a leakage-proof seal, preventing the hydraulic fluid in the first sliding passage H1 leaking from the opening.

The present disclosure further provides a photography support stand. Referring to FIG. 1, the photography support stand includes:
a bearing base 200 configured for mounting a photography device;
multiple support legs 300 with a telescopic adjustment function, the multiple support legs 300 being connected with the bearing base 200 and configured to support the bearing base 200, and each support leg 300 being correspondingly provided with a support leg locking assembly; and
the control handle 100 according to any of the foregoing embodiments, the control handle 100 being arranged on the bearing base 200 and configured to unlock or lock the support leg locking assemblies.

The specific structure of the control handle 100 refers to the foregoing embodiments. Since the photography support stand adopts all the technical solutions of all the foregoing embodiments, it at least has all the technical effects brought by the technical solutions of the foregoing embodiments, which is not detailed herein.

The above-mentioned are only part or preferred embodiments of the present disclosure, and neither the words nor the drawings can limit the scope of protection of the present disclosure. Any equivalent structural transformation made by using the specification and drawings of the present disclosure under the concept of the present disclosure as a whole, or directly/indirectly applied in other related technical fields are included in the scope of protection of the present disclosure.

## Claims

1. A control handle of a photography support stand, **characterized in that**, the control handle is configured to unlock or lock a support leg locking assembly of the photography support stand, and the control handle comprises:
a handle housing (110); and
a hydraulic cylinder (120) arranged in the handle housing (110), the hydraulic cylinder (120) comprising a cylinder body (121) and a first piston (122), the cylinder body (121) being defined with a hydraulic chamber (121Y) for storing hydraulic fluid and a through hole that is communicated with the hydraulic chamber (121Y) and configured to allow the hydraulic fluid to enter or exit the hydraulic chamber (121Y), the through hole being communicated with the support leg locking assembly, and the first piston (122) being slidably arranged in the hydraulic chamber (121Y) and configured to expel the hydraulic fluid in the hydraulic chamber (121Y) through the through hole or draw the hydraulic fluid back into the hydraulic chamber (121Y) through the through hole.

2. The control handle according to claim 1, wherein the first piston (122) comprises a first piston plate (1221) and a first piston rod (1222) extending from a side surface of the first piston plate (1221), and the first piston plate (1221) is in sliding fit with a chamber wall of the hydraulic chamber (121Y).

3. The control handle according to claim 2, wherein the cylinder body (121) is defined with a first sliding passage (H1) extending along an axial direction of the cylinder body (121), an end of the first sliding passage (H1) is docked with the hydraulic chamber (121Y), and the other end of the first sliding passage (H1) is defined with an opening; and the first piston rod (1222) passes through the first sliding passage (H1) and extends out of the cylinder body (121) through the opening; and
a first gap (J1) through which the hydraulic fluid passes is defined between the first piston rod (1222) and an inner wall of the first sliding passage (H1), the cylinder body (121) is further defined with a first over-flow port (G1) penetrating through the inner wall of the first sliding passage (H1) and communicated with the first sliding passage (H1), and a liquid storage bin (130) is defined in the handle housing (110) and communicated with the first over-flow port (G1).

4. The control handle according to claim 3, wherein an outer wall of the first piston rod (1222) is sleeved with a first sealing ring (M1), the first sealing ring (M1) is capable of moving along with the first piston rod (1222), to enter the first sliding passage (H1) from the hydraulic chamber (121Y) to seal the first gap (J1) or enter the hydraulic chamber (121Y) from the first sliding passage (H1) to unseal the first gap (J1).

5. The control handle according to claim 1, wherein the control handle further comprises:
a pressure relief chamber (122X) for accommodating the hydraulic fluid;
wherein, the first piston (122) is defined with a pressure relief hole (122K), the hydraulic chamber (121Y) is communicated with the pressure relief chamber (122X) through the pressure relief hole (122K), a first reset component (123) and a slidable second piston (124) are provided in the pressure relief chamber (122X), and the first reset component (123) is configured to apply a force to the second piston (124) to reset the second piston (124).

6. The control handle according to claim 5, wherein, the pressure relief chamber (122X) is defined in the first piston (122), and the pressure relief hole (122K) is capable of allowing the hydraulic fluid to pass through.

7. The control handle according to claim 6, wherein the first piston (122) comprises a first piston plate (1221) and a first piston rod (1222) extending from a side surface of the first piston plate, and the first piston plate (1221) is in sliding fit with a chamber wall of the hydraulic chamber (121Y); and
the pressure relief chamber (122X) is defined in the first piston plate (1221).

8. The control handle according to claim 7, wherein the second piston (124) comprises a second piston plate (1241) and a second piston rod (1242) extending from a side surface of the second piston plate (1241), and the second piston plate (1241) is in sliding fit with a chamber wall of the pressure relief chamber (122X); and
the first reset component (123) is a first reset spring, one end of the first reset spring abuts against the chamber wall of the pressure relief chamber (122X), and the other end of the first reset spring abuts against the second piston plate (1241).

9. The control handle according to claim 8, wherein,
the second piston (124) is inversely mounted in the pressure relief chamber (122X), the second piston rod (1242) is oriented opposite to the first piston rod (1222) and extends out from the second piston plate (1241), and the first reset spring is sleeved on the second piston rod (1242); and
the pressure relief hole (122K) is defined in the first piston rod (1222), a pressure relief passage (Xt) is defined in the first piston rod (1222), and the pressure relief hole (122K) is communicated with the pressure relief chamber (122X) through the pressure relief passage (Xt).

10. The control handle according to any one of claims 2 to 9, wherein the control handle further comprises:
a lever (140) located on a peripheral side of the handle housing (110), an end of the lever (140) being hinged with the handle housing (110) and provided with a lifting member (150), the lifting member (150) being arranged in the handle housing (110) and configured to act on an end of the first piston rod (1222) facing away from the first piston plate (1221), the lever (140) being capable of pivoting to drive the lifting member (150) to act on the first piston rod (1222) so as to drive the first piston (122) to move; and
a second reset component (160) arranged in the hydraulic chamber (121Y), the second reset component (160) being configured to apply a force to the first piston plate (1221) to reset the first piston (122).

11. The control handle according to claim 10, wherein the control handle further comprises:
a knob (170) rotatably arranged at an end of the lever (140);
an abutment member (180) located on a side of the lever (140) facing the handle housing (110) and connected with the knob (170);
a first torsion spring (191) arranged between the lever (140) and the knob (170), the first torsion spring (191) being configured to apply a force to the knob (170) to reset the knob (170); and
a second torsion spring (192) arranged between the lever (140) and the handle housing (110), the second torsion spring (192) being configured to apply force to the lever (140) to reset the lever (140);
wherein, one end of the lifting member (150) is hinged with the lever (140) and the handle housing (110) through a hinge shaft (Jz), and the other end of the lifting member (150) is configured to act on the first piston rod (1222), and the lifting member (150) is provided with an abutment surface (151) and an accommodation opening (152) that are arranged adjacently along an axial direction of the hinge shaft (Jz), the abutment member (180) is capable of moving along with the rotation of the knob (170) to a first position where it abuts against the abutment surface (151) or a second position where it is accommodated at the accommodation opening (152).

12. The control handle according to claim 8, wherein the second piston (124) is normally mounted in the pressure relief chamber (122X), the second piston rod (1242) is oriented in a same direction as the first piston rod (1222), and the first reset spring is located on a side of the second piston plate (1241) facing away from the second piston rod (1242);
the first piston rod (1222) is defined with a second sliding passage (H2) extending along an axial direction of the first piston rod (1222), one end of the second sliding passage (H2) is docked with the pressure relief chamber (122X), and the second piston rod (1242) is inserted into the second sliding passage (H2) and in sliding fit with the second sliding passage (H2); and
the pressure relief chamber (122X) at least partially extends into the first piston rod (1222), and the pressure relief hole (122K) is defined in the first piston rod (1222) and is arranged to penetrate through an inner wall of the pressure relief chamber (122X).

13. The control handle according to claim 12, wherein the first piston rod (1222) is further defined with an over-flow passage (Gt) extending along the axial direction of the first piston rod (1222), and the over-flow passage (Gt) is located at the other end of the second sliding passage (H2) and communicated with the second sliding passage (H2); and
a second gap (J2) through which the hydraulic fluid passes is defined between the second piston rod (1242) and an inner wall of the second sliding passage (H2), and the first piston rod (1222) is further defined with a second over-flow port penetrating through an inner wall of the over-flow passage (Gt) and communicated with the over-flow passage (Gt).

14. The control handle according to claim 13, wherein,
an outer wall of the second piston rod (1242) is sleeved with a second sealing ring (M2), the second sealing ring (M2) is capable of moving along with the second piston rod (1242), to enter the second sliding passage (H2) from the pressure relief chamber (122X) to seal the second gap (J2) or enter the pressure relief chamber (122X) from the second sliding passage (H2) to unseal the second gap (J2);
or
a third sealing ring (M3) is embedded in the inner wall of the first sliding passage (H1), and the third sealing ring (M3) is arranged adjacent to the end of the first sliding passage (H1) docked with the hydraulic chamber (121Y) and is configured to abut against the first piston rod (1222).

15. A photography support stand, comprising:
a bearing base (200), configured for mounting a photography device;
multiple support legs (300) with a telescopic adjustment function, the multiple support legs (300) being connected with the bearing base (200) and configured to support the bearing base (200), and each support leg (300) being provided with a support leg locking assembly; and
the control handle (100) according to any one of claims 1 to 14, the control handle being arranged on the bearing base (200) and configured to unlock or lock the support leg locking assemblies.
